Europäisches Patentamt

European Patent Office

Office européen des brevets

(11) Publication number: 0 565 888 A2

# EUROPEAN PATENT APPLICATION

(21) Application number: 93104321.0

(22) Date of filing: 17.03.93

(51) Int. Cl.5: G11B 23/087

(30) Priority: 15.04.92 JP 95066/92

(43) Date of publication of application:
20.10.93 Bulletin 93/42

(84) Designated Contracting States:
DE FR GB IT NL

(71) Applicant: MATSUSHITA ELECTRIC
INDUSTRIAL CO., LTD.
1006, Oaza Kadoma
Kadoma-shi, Osaka-fu, 571(JP)

(72) Inventor: Watanabe, Masaru
3-9-305, Agenaruo-cho
Nishinomiya-shi, Hyogo-ken 663(JP)
Inventor: Nishiyama, Tousaku
5-2-302, Myokenzaka
Katano-shi, Osaka-fu 576(JP)
Inventor: Ohata, Tsumoru
1-1-304, Yozai,
Momoyama-cho,
Fushimi-ku
Kyoto-shi, Kyoto-fu 612(JP)

(74) Representative: Eisenführ, Speiser & Partner
Martinistrasse 24
D-28195 Bremen (DE)

(54) Magnetic tape cassette.

(57) A magnetic tape cassette for accommodating a length of magnetic tape, which comprises a generally rectangular flat box-like casing including a pair of flat panels confronting with each other, a pair of hub assemblies rotatably accommodated within the casing in spaced relation to each other, and at least one generally rectangular low-friction sheet interposed between the hub assemblies and one of the flat panels adjacent such one end of the inner hub of each hub assembly. Each of the hub assemblies includes cylindrical outer and inner hubs coaxial with each other, at least one end of the inner hub protruding axially outwardly from a plane in which an annular end face of the outer hub adjacent such one end of the inner hub lies. The low-friction sheet has a flat region and a pair of ridges defined on respective side of the flat region and spaced a predetermined distance from each other. Each of the ridges extends in a direction lengthwise of the casing and parallel to an imaginary line passing through respective axes of rotation of the associated hub assemblies. Such one end of the inner hub of each hub assembly is supported on and rests rotatably on the flat region of the low-friction sheet. The predetermined distance between the ridges is chosen to be greater than the outer diameter of the outer hub of each hub assembly.

Fig.1

Rank Xerox (UK) Business Services
(3.10/3.6/3.3.1)

## BACKGROUND OF THE INVENTION

### (Field of the Invention)

The present invention generally relates to a magnetic tape cassette accommodating therein a reeled length of magnetic recording tape and, more particularly, to an improvement in the magnetic tape cassette for minimizing a tension which acts on the length of magnetic tape during a travel thereof from a supply hub assembly to a take-up hub assembly.

### (Description of the Prior Art)

The prior art analog compact cassette for music recording or reproduction, in which a reeled length of magnetic tape specifically designed to record or reproduce analog music information thereon or therefrom is accommodated, such as disclosed in, for example, the Japanese Patent Publication No. 61-14594 published in 1986, includes first and second flat panels, front and rear walls and a pair of end walls, all assembled together to render the magnetic tape cassette to represent a generally rectangular flat box-like configuration. In practice, the magnetic tape cassette is divided into two casing halves along a plane generally intermediate of the thickness of the magnetic tape cassette. The magnetic tape cassette also includes a pair of hub assemblies rotatably supported within the magnetic tape cassette and spaced apart from each other. Respective opposite ends of the length of magnetic tape are anchored to the hub assemblies which serve sometime as supply and take-up hub assemblies and sometime as take-up and supply hub assemblies, respectively, depending on the placement of the magnetic tape cassette relative to a cassette tape recorder or player.

According to the above mentioned publication, each of the hub assemblies comprises inner and outer hubs integrally formed with each other in a coaxial relationship with each other, and a plurality of circumferentially equally spaced engagement pins protruding radially inwardly from an inner peripheral surface of the inner hub for driving engagement with an associated shaft in the cassette tape player which may either be coupled with a drive motor or rotate idle. In order to avoid any possible disturbance to a winding of the length of magnetic tape around the tape-up hub assembly, the use is made of a low-friction sheet disposed within the magnetic tape cassette and interposed between the hub assemblies and any one of the first and second flat panels. The low-friction sheet has a flat area and a plurality of ridges, and each hub assembly within the magnetic tape cassette has rotatably supported with the inner and outer hubs resting on the flat area and the ridges.

It has, however, been found that, when the prior art magnetic tape cassette is loaded in the cassette tape player, the length of magnetic tape tends to be highly tensioned during a travel of the length of magnetic tape from the supply hub assembly onto the take-up hub assembly. For example, when the prior art magnetic tape cassette is loaded in the commercially available analog cassette tape player and the length of magnetic tape is run from the supply hub assembly onto the take-up hub assembly, the tension measured of a portion of the magnetic tape running between a magnetic recording and/or reproducing head and a pinch roller has amounted to 50 grams.

As indicated hereinbefore, the inner and outer hubs of the supply hub assembly are rotatably held in contact with the low-friction sheets and, consequently, the supply hub assembly has a relatively large surface area of contact with the low-friction sheets. An increased surface area of contact of the supply hub assembly with the low-friction sheets causes the supply hub assembly to receive a relatively high resistance to rotation, accompanied by an increase in tension of that portion of the magnetic tape. If the resistance to the rotation of the supply hub assembly is high, the pinch roller installed in the cassette tape player for drawing the length of magnetic tape from the supply hub assembly onto the take-up hub assembly is required to exert a correspondingly increased driving force which in turn requires an increased electric power consumption. The increased power consumption is indeed undesirable and should be avoided in the case of the cassette tape player being of a battery-operated model, by the reason well known to those skilled in the art.

## SUMMARY OF THE INVENTION

In view of the foregoing, the present invention therefore provides an improved magnetic tape cassette of a design effective to minimize the tension acting on the length of magnetic tape during the travel thereof from the supply hub assembly onto the take-up hub assembly.

In order to accomplish the foregoing object, the present invention provides a magnetic tape cassette which comprises a generally rectangular flat box-like casing including a pair of flat panels confronting with each other, a pair of hub assemblies rotatably accommodated within the casing in spaced relation to each other, and at least one generally rectangular low-friction sheet interposed between the hub assemblies and one of the flat panels adjacent said one end of the inner hub of each hub assembly. Each of the hub assemblies includes cylindrical outer and inner hubs coaxial with each other, at least one end of said inner hub protruding axially outwardly from a plane in which an annular end face of the outer hub adjacent said one end of the inner hub lies.

The low-friction sheet has a flat region and a pair of ridges defined on respective side of the flat region and spaced a predetermined distance from each other. Each of the ridges extends in a direction lengthwise of the casing and parallel to an imaginary line passing through respective axes of rotation of the associated hub assemblies.

In this structure, said one end of the inner hub of each hub assembly is supported on and rests rotatably on the flat region of the low-friction sheet. The predetermined distance between the ridges is chosen to be greater than the outer diameter of the outer hub of each hub assembly.

Preferably, the predetermined distance between the ridges of the low-friction sheet has the following relationship with the outer diameter of the outer hub of each hub assembly:

$$(D + 4\ mm) \geqq F \geqq (D + 0.2\ mm)$$

wherein D represents the outer diameter of the respective outer hub and F represents the predetermined distance between the ridges.

## BRIEF DESCRIPTION OF THE DRAWINGS

This and other objects and features of the present invention will become clear from the following description taken in conjunction with a preferred embodiment thereof with reference to the accompanying drawings, in which like parts are designated by like reference numerals and in which:

Fig. 1 is an exploded view of a magnetic tape cassette embodying the present invention;

Fig. 2 is a top plan view of one of low-friction sheets employed in the magnetic tape cassette;

Fig. 3 is an end view of the low-friction sheet shown in Fig. 2;

Fig. 4 is a longitudinal sectional view, on an enlarged scale, of one of hub assemblies employed in the magnetic tape cassette embodying the present invention;

Fig. 5 is a top plan view of the respective hub assembly shown in Fig. 4;

Figs. 6a and 6b are longitudinal sectional views of the tape cassette showing hub lock pawls of a shutter member held in release and lock positions to allow the reels to rotate freely and to be retained in position, respectively; and

Fig. 7 is a view similar to Fig. 4, showing a modified form of the respective hub assembly.

## DETAILED DESCRIPTION OF THE EMBODIMENT

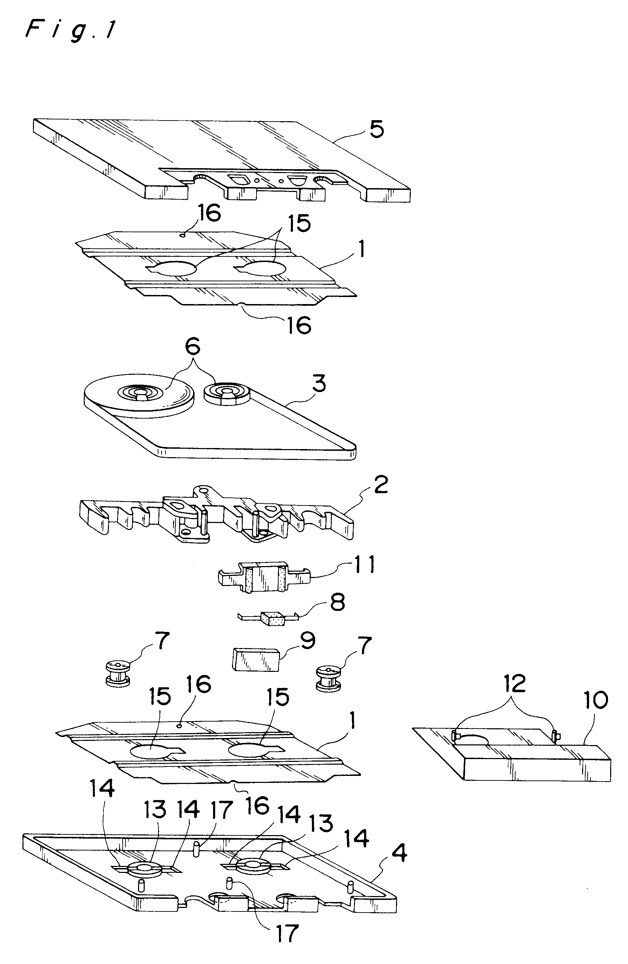

Referring now to Fig. 1, a magnetic tape cassette shown therein in accordance with the present invention is standardized in size and configuration so that it can be used with the commercially available cassette tape player. This magnetic tape cassette comprises rectangular top and bottom casing halves 4 and 5 each having top or bottom panel portion, front and rear wall portions and a pair of end wall portions, all assembled together by means of a plastics molding technique so that, when the top and bottom are mounted one above the other and fastened together by the use of either set screws or a fusion bonding technique, a complete magnetic tape cassette including top and bottom flat panels, front and rear walls and a pair of end walls can be formed having a tape chamber defined therein.

The magnetic tape cassette has a pair of guide rollers 7, a pair of hub assemblies 6, a length of magnetic tape 3 having its opposite ends anchored to the respective hub assemblies 6, a tape guide 2, a magnetic shield piece 9, a pressure pad 8 and a guide unit 11, all accommodated and disposed therein in a manner well known to those skilled in the art. It is to be noted that, by the reason also well known to those skilled in the art, the front wall of the magnetic tape cassette has a plurality of, for example, three, access openings defined therein. As discussed hereinafter, the magnetic tape cassette also has generally rectangular top and bottom low-friction sheets, generally identified by 1, of identical construction each positioned between the hub assemblies 6 and the top or bottom panel of the magnetic tape cassette.

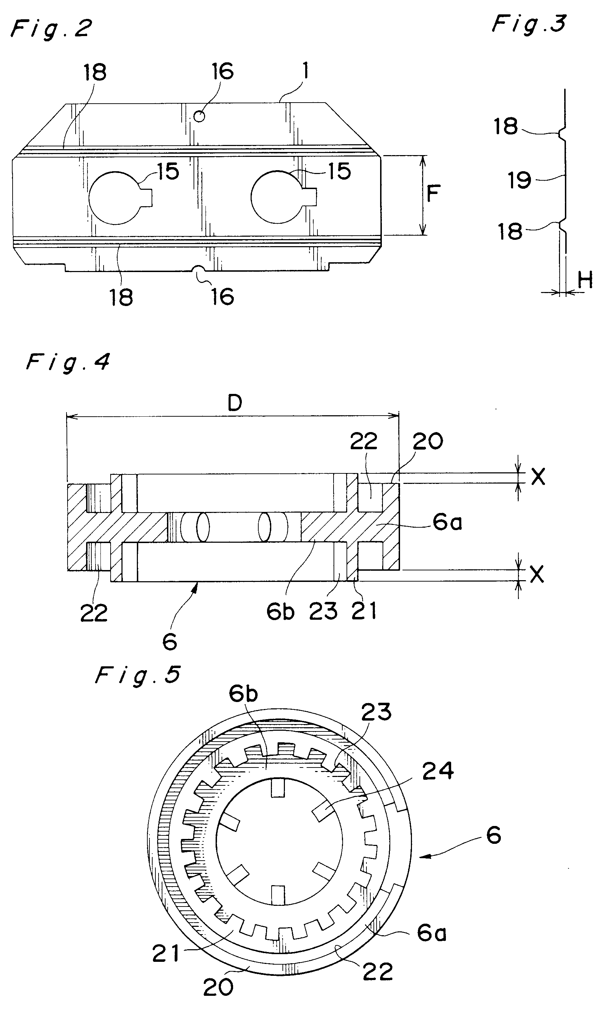

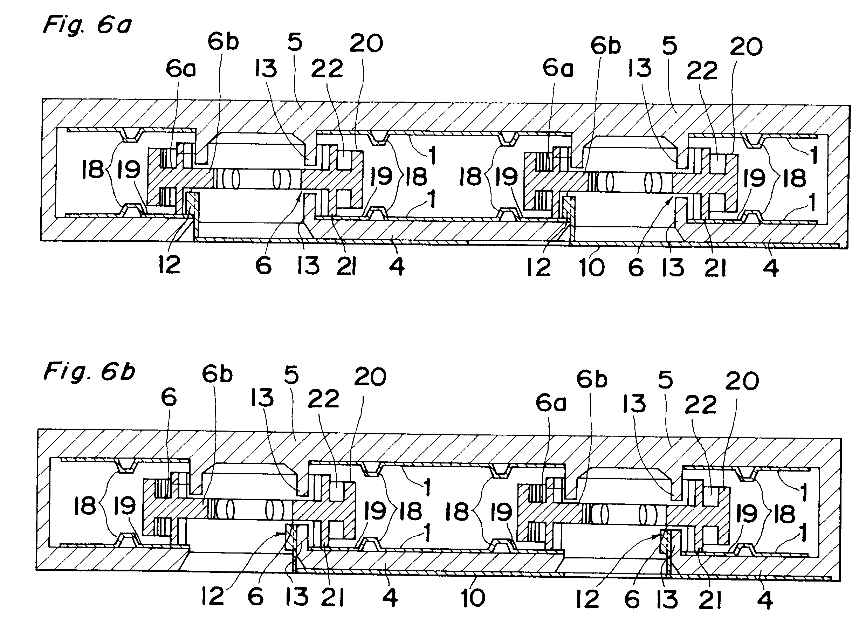

As best shown in Figs. 1 and 3, the bottom wall portion of the lower casing half 4 (or the bottom wall of the magnetic tape cassette) has a pair of access holes defined therein and is, for each of the access holes, formed with a tubular flange 13 protruding into the tape chamber a distance smaller than half the thickness of the magnetic tape cassette in coaxial relationship with the associated access hole. Similarly, as shown in Fig. 6, the top wall portion of the upper casing half 4 (or the top wall of the magnetic tape cassette) has a pair of tubular bearing flanges protruding into the tape chamber a distance smaller than half the thickness of the magnetic tape cassette in alignment with the tubular bearing flanges 13 in the bottom wall portion of the lower casing half 4.

For the purpose which will now be described, the bottom wall portion of the lower casing half 4 is formed with a pair of guide slots 14 positioned on respective sides of and communicated with each access hole and also with the interior of each tubular flange 13. To avoid any possible entry of foreign matter into the tape chamber through the access openings in the front wall of the magnetic tape cassette and also to avoid any possible idle rotation of any one of the hub assemblies 6 within the tape chamber, the magnetic tape cassette includes a shutter plate 10 fitted to the lower casing half 4 for sliding movement between open and closed positions in a direction parallel to the lengthwise direction of the magnetic tape cassette, i.e., parallel to the imaginary line connecting between the respective centers of the tubular bearing flanges 13. As will become clear from the subsequent description, the shutter plate 10 has a pair of hub lock pawls 12 secured thereto or otherwise formed integrally therewith so as to movably engage in the guide slots 14, respectively.

For facilitating a positioning the low-friction sheets 1 relative to the lower and upper casing halves 4 and 5 and also for the ease of placement of the low-friction sheets 1 during the assembly of the magnetic tape cassette, the bottom and top panels have a pair of positioning pins 17 protruding inwardly to cooperate with positioning holes 16 defined in each low-friction sheet 1.

As best shown in Figs. 1 and 2, each of the low-friction sheets 1 has a pair of holes 15 defined therein in alignment with the associated access holes 13 in the bottom panel portion of the lower casing half 4 and also with guide slots communicated with the holes 15, such that each hole 15 communicated with the associated slot represents a shape similar to that of the associated access hole 13 communicated with the guide slots 24. It is to be noted that each hole 15 in the respective low-friction sheet 1 has a diameter substantially equal to or slightly greater than the outer diameter of the respective tubular flange 13 so that, when the low-friction sheet 1 is placed on the bottom or top panel portion of the casing half 4 or 5, the tubular bearing flanges 13 protrude through the associated holes 15. Even though there is a substantial clearance between the outer peripheral surface of each tubular flange 13 and the associated hole in the respective low-friction sheet 1, any possible loose movement of the low-friction sheet 1 within the magnetic tape cassette can advantageously be avoided in view of the employment of the positioning pins 17 cooperable with the positioning holes 16 in the low-friction sheet 1.

Each of the low-friction sheets 1 employed in the magnetic tape cassette according to the present invention is made of synthetic resin such as, for example, polyethylene terephthalate or high-density polyethylene and has a thickness within the range of 30 to 60 $\mu$m. As best shown in Figs. 2 and 3, each low-friction sheet 1 has a pair of ridges 18 formed therein so as to extend in a direction lengthwise thereof and parallel to the imaginary line passing through the respective centers of the holes 15 while leaving a flat region 19 between these ridges 18. The flat region 19 of each low-friction sheet 1 has a width indicated by F and each ridge 18 has a height indicated by H.

As shown in Figs. 4 to 6, the hub assembly 6 is of one-piece construction including cylindrical outer and inner hubs 20 and 21 in coaxial relationship with each other, the inner hub 21 positioned inside the outer hub 20 and integrally connected therewith through an outer radial flange 6a positioned intermediate of the length of any one of the outer and inner hubs 20 and 21. The hub assembly 6 also includes an inner radial flange 6b positioned intermediate of the length of any one of the outer and inner hubs 20 and 21 in alignment with the outer radial flange 6a and extending radially inwardly from an inner peripheral surface of the inner hub 20, and a plurality of circumferentially equally spaced engagement pins 24 protruding radially inwardly from an inner peripheral surface of the inner radial flange 6b. As is well known to those skilled in the art, the engagement pins 24 are used to engage corresponding spline grooves defined in a drive shaft in the cassette tape player for receiving a driving force from the drive shaft.

In practice, the hub assembly 6 is formed by the use of any known plastics molding technique. This plastic molding technique is to be applied with the use of a mold assembly of a design by which an annular groove 22 can be formed in the hub assembly 6 at a location between the outer and inner hubs 20 and 21 and above and below the radial flange 6a to minimize or substantially avoid a shrinkage of the outer hub 20 which would otherwise results in an irregular winding of the length of magnetic tape around the resultant hub assembly.

Each hub assembly 6 of the above described structure is rotatably housed within the magnetic tape cassette with the tubular bearing flanges 13 in the top and bottom panels loosely protruding into the inner hub 21 so as to terminate spaced inwardly from the inner radial flange 6b as best shown in Fig. 6. In this way, the hub assemblies 6 are retained in position inside the magnetic tape cassette.

In accordance with the present invention, the outer hub 20 of each hub assembly 6 has an axial length smaller than that of the inner hub 21 of the respective hub assembly 6 and is positioned intermediate the axial length of the inner hub 21 so that no opposite ends of the outer hub 20 will not contact the top and bottom panels within the magnetic tape cassette as shown in Fig. 4 and 6. More specifically, as best shown in Fig. 4, the outer hub 20 of each hub assembly 6 is so selected that opposite end portions of the associated inner hub 21 protrude an equal distance X outwardly from respective plane in which opposite end faces of the inner hub 21 lie. This design is particularly important where the magnetic tape cassette embodying the present invention is of a reversible type, that is, that can be reversed for recording or reproducing information on or from a different track on the length of magnetic tape after the recording or reproducing of information on or from one track has been completed.

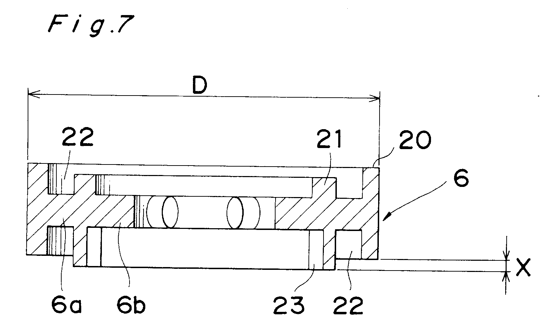

Alternatively, where the magnetic tape cassette embodying the present invention is of a design wherein the recording or reproducing of information on or from the length of magnetic tape is carried out by one direction scan, the outer hub 20 of each hub assembly may be positioned axially offset relative to the respective inner hub 21 while allowing only one end portion of the inner hub 21 to protrude a distance X outwardly from the plane in which the adjacent end face of the outer hub 20 lies, as best shown in Fig. 7. This can readily be accomplished by reducing the length of only an upper end portion of the inner tube 21 as compared with that shown in Figs. 4 and 5.

Also in accordance with the present invention, the width F of the flat region 19 of each of the low-friction sheets 1 employed in the magnetic tape cassette embodying the present invention is chosen so as to be greater than the outer diameter D of each hub assembly 6 (that is represented by the outer diameter of the corresponding outer hub 20) and, preferably, so as to satisfy the following relationship:

$$(D + 4 \text{ mm}) \geqq F \geqq (D + 0.2 \text{ mm})$$

In the illustrated embodiment, each hub assembly 6 is chosen to have a diameter of 21.8 mm, and the flat region 19 of each low-friction sheet 1 is chosen to have a width F of 22 mm. Furthermore, the height H of each of the ridges 8 in each low-friction sheet 1 is chosen to be equal to or greater than the distance X referred to above and, preferably, within the range of 0.2 to 0.3 mm.

As best shown in Fig. 5, each of the hub assemblies 6 has a plurality of radially inwardly extending detent recesses 23 formed in the inner peripheral surface of the inner hub 21 of each hub assembly 6 adjacent one end thereof confronting the bottom panel of the lower casing half 4. Any one of the detent recesses 23 will receive therein the corresponding hub lock pawl 12 rigid or integral with the shutter plate 10 when the latter is moved to the closed position, thereby to prevent the hub assemblies 6 from being rotated idle when the magnetic tape cassette of the present invention is not in use.

From the foregoing full description of the present invention, it is clear that, since the outer hub 20 has at least one end axially protruding the distance X outwardly from the inner hub 21 and since the flat region F of at least one low-friction sheet 1 has a width F greater than the outer diameter of the outer hub 20 of each hub assembly 1, only the inner hub 21 is supported on the low-friction sheet 1 for rotation about the axially aligned tubular bearing flanges 13. At this time, the outer hub 20 contacts nowhere in any portion of the low-friction sheet 1 and, therefore, as compared with the prior art magnetic tape cassette, each of the hub assemblies 6 employed in the magnetic tape cassette embodying the present invention has a minimized surface area of contact with the low-friction sheet 1.

Important to note is that no portion of each of the ridges 8 of the low-friction sheet 1 contact the outer hub 20 and, consequently, a measurement of the tension of a portion of the magnetic tape running between a magnetic recording and/or reproducing head and a pinch roller when the magnetic tape cassette embodying the present invention has been loaded in the commercially available analog cassette tape player and the length of magnetic tape is run from the supply hub assembly onto the take-up hub assembly, has indicated 30 grams which is smaller than 50 grams exhibited in the prior art magnetic tape cassette.

Also, since the height of each ridge 8 of the low-friction sheet 1 is chosen to be equal to or greater than the distance X of protrusion of at least one end of the inner hub 21 from the adjacent annular end face of the outer hub 20, the ridges 8 of the low-friction sheet 1 satisfactorily and advantageously operate to suppress any undesirable lateral displacement of the length of magnetic tape during a winding thereof around one of the hub assemblies 6 in a direction widthwise of the magnetic tape, thereby permitting the length of magnetic tape to be properly and uniformly wound around the associated hub assembly 6 without some of the turns of the magnetic tape around the hub assembly 6 displaced laterally from the remaining turns of the magnetic tape.

To satisfy the dimensional relation of the width F of the flat region 19 of the low-friction sheet relative to the outer diameter of each hub assembly 6 as set forth hereinbefore is effective to minimize any turbulent winding of the length of magnetic tape which would otherwise occur between any one of the ridges 8 and the outer hub 20 of each hub assembly 6. Specifically, if the width F of the flat region 19 of the low-friction sheet 1 is greater than the maximum limit of (D + 4 mm), the minimum distance of spacing between any one of the ridges 8 and the outer hub 20 of each hub assembly 6 is too large enough to cause a lateral displacement of the length of magnetic tape during the winding thereof, resulting in a formation of irregularly laterally displaced turns of the length of magnetic tape around the associated hub assembly 6. Conversely, if the width F is smaller than the minimum limit of (D + 0.2 mm), the outer peripheral portion of the outer hub 20 of each hub assembly 6 may contact any of the ridges 8 of the low-friction sheet 1 with a undesirable resistance to rotation consequently acting on the associated hub assembly 6.

Although the present invention has been described in connection with the preferred embodiment thereof with reference to the accompanying drawings, it is to be noted that various changes and modifications are apparent to those skilled in the art. Such changes and modifications are to be understood as included within the scope of the present invention as defined by the appended claims, unless they depart therefrom.

## Claims

1. A magnetic tape cassette for accommodating a length of magnetic recording tape, which comprises:

   a generally rectangular flat box-like casing including a pair of flat panels confronting with each other;

   a pair of hub assemblies rotatably accommodated within the casing in spaced relation to each other, each of said hub assemblies including cylindrical outer and inner hubs coaxial with each other, at least one end of said inner hub protruding axially outwardly from a plane in which an annular end face of the outer hub adjacent said one end of the inner hub lies; and

   at least one generally rectangular low-friction sheet interposed between the hub assemblies and one of the flat panels adjacent said one end of the inner hub of each hub assembly, said low-friction sheet having a flat region and a pair of ridges defined on respective side of the flat region and spaced a predetermined distance from each other, each of said ridges extending in a direction lengthwise of the casing and parallel to an imaginary line passing through respective axes of rotation of the associated hub assemblies, said one end of the inner hub of each hub assembly rotatably resting on the flat region of said low-friction sheet, said predetermined distance being greater than the outer diameter of said outer hub of each hub assembly.

2. The magnetic tape cassette as claimed in Claim 1, wherein said predetermined distance between the ridges of the low-friction sheet, expressed by F, has the following relationship with the outer diameter, expressed by D, of the outer hub of each hub assembly:

$$(D + 4\ mm) \geq F \geq (D + 0.2\ mm)$$

Fig.1

*Fig.2*

*Fig.3*

*Fig.4*

*Fig.5*

Fig. 6a

Fig. 6b

*F i g.7*